Europäisches Patentamt

European Patent Office

Office européen des brevets

(19)

(11) Numéro de publication: **0 352 604**

**A1**

(12) **DEMANDE DE BREVET EUROPEEN**

(21) Numéro de dépôt: **89113152.6**

(22) Date de dépôt: **18.07.89**

(51) Int. Cl.⁴: **H01M 2/16 , H01M 2/14 , H01M 6/04 , H01M 4/62**

(30) Priorité: **25.07.88 FR 8810017**

(43) Date de publication de la demande:
**31.01.90 Bulletin 90/05**

(84) Etats contractants désignés:
**DE ES FR**

(71) Demandeur: **CIPEL**
**125, rue du Président Wilson**
**F-92300 Levallois-Perret(FR)**

Demandeur: **WONDER**
**7-9, rue Paul Vaillant-Couturier**
**F-92300 Levallois-Perret(FR)**

(72) Inventeur: **Audebert, Jean François**
**5 Cours des Mousquetaires**
**F-27100 Val De Reuil(FR)**
Inventeur: **Mas, Jean-Claude**
**c/o CIPEL 125, rue du Président Wilson**
**F-92300 Levallois-Perret(FR)**
Inventeur: **Mendiboure, André c/o CIPEL**
**125, rue du Président Wilson**
**F-92300 Levallois-Perret(FR)**

(74) Mandataire: **Weinmiller, Jürgen et al**
**Lennéstrasse 9 Postfach 24**
**D-8133 Feldafing(DE)**

(54) **Générateur électrochimique primaire à électrolyte alcalin et à électrode négative de zinc.**

(57) Générateur électrochimique primaire à électrolyte alcalin et à électrode négative de zinc, dont l'électrode positive est à base de bioxyde de manganèse, et dont le séparateur comprend au moins un support en fibres de polymère tissées ou non, caractérisé par le fait que, ladite électrode négative de zinc étant exempte de mercure, et de cadmium, ledit support est revêtu sur au moins une de ses faces d'un film en un matériau comportant un gélifiant stable en milieu alcalin.

## Générateur électrochimique primaire à électrolyte alcalin et à électrode négative de zinc

La présente invention concerne un générateur électrochimique primaire à électrolyte alcalin et à électrode négative de zinc, et notamment une pile alcaline du type bioxyde de manganèse/zinc. L'invention se rapporte en particulier à un séparateur pour un tel générateur

Il est connu que, dans les générateurs électrochimiques, les deux électrodes positive et négative doivent être séparées par un isolant électronique perméable aux ions de conduction, que l'on appelle séparateur.

Ces séparateurs sont habituellement constitués soit de feutres de fibres non tissées, les fibres étant de nature cellulosique ou polymérique, soit d'une couche d'électrolyte gélifié par un agent gélifiant compatible avec la nature de l'électrolyte.

Dans les piles utilisant une électrode positive au bioxyde de manganèse, une électrode négative en poudre de zinc gélifiée amalgamée et un électrolyte alcalin, l'isolement électronique entre électrodes est généralement assuré par un feutre de fibres de polymères, telles que des fibres d'alcool polyvinylique, seules ou en mélange avec des fibres de cellulose, de rayonne, de vinyle, d'acétates vinyliques, de polyamides, de polypropylène ou de chlorure de polyvinyle. Cet isolement électrique peut être également assuré par une pâte d'électrolyte gélifié par un gélifiant stable en milieu alcalin, tel que la carboxyméthylcellulose, l'hydroxypropylcellulose, ou l'alcool polyvinylique, les amidons modifiés (cf. brevet français FR-A-2 251 109).

Dans l'art antérieur, il est habituel d'amalgamer les électrodes de zinc pour éviter leur corrosion, et de leur ajouter de la poudre de cadmium pour assurer leur conductivité électronique.

La société demanderesse a développé un nouveau modèle de pile alcaline dite "pile propre" ne contenant ni mercure, ni cadmium.

Dans les piles alcalines classiques le mercure et le cadmium sont ajoutés sous différentes formes à l'électrode négative de zinc pour diminuer voire supprimer les phénomènes de corrosion du zinc qui se traduisent par un dégagement de gaz dans la pile. Ce dégagement de gaz s'il est trop important peut faire augmenter la pression dans la pile jusqu'à rupture de l'étanchéité de la pile et fuite de l'électrolyte. La corrosion du zinc, si elle est mal contrôlée, entraîne aussi une perte de capacité de l'électrode négative et donc de la pile en cours de stockage.

Plusieurs inhibiteurs non polluants ont été proposés comme substituants au mercure et au cadmium. Les plus efficaces semblent être des molécules organiques qui, par leur rôle tensioactif, agissent sur la surface des particules de zinc de l'électrode négative en diminuant la cinétique de corrosion du zinc.

Malheureusement le remplacement total du mercure et du cadmium nécessite l'utilisation de grande quantité d'inhibiteur organique. Il en résulte un inconvénient majeur qui est la perte partielle de conductivité électrique entre les grains de zinc, et par conséquent de mauvaises caractéristiques de décharge de la pile, en particulier à fort courant.

Pour remédier à cet inconvénient on combine l'utilisation d'un inhibiteur de corrosion organique et d'un composé minéral, tel que par exemple l'indium, qui rétablit une certaine conductivité électronique entre les grains de zinc.

Cette technique conduit cependant à des compromis quantitatifs entre inhibiteur organique et conducteur électronique qui peuvent aboutir à une corrosion du zinc limitée, mais néanmoins trop importante pour assurer une très grande durée de vie de la pile.

La présente invention a pour but d'éviter cet inconvénient. Les recherches menées par la demanderesse sur la mise au point d'une pile propre montrent que, pour limiter les pertes énergétiques, il convient de tenir compte de l'environnement complet d'une pile alcaline, c'est-à-dire de l'électrode positive, du container, de la répartition de l'électrolyte, de l'arrangement intérieur de l'élément, et en particulier du séparateur.

La présente invention a pour objet un générateur électrochimique primaire à électrolyte alcalin et à électrode négative de zinc, dont l'électrode positive est à base de bioxyde de manganèse, et dont le séparateur comprend au moins un support en fibres de polymère tissées ou non, caractérisé par le fait que, ladite électrode négative de zinc étant exempte de mercure et de cadmium et comprenant au moins un inhibiteur organique et au moins un composé minéral tel que par exemple l'indium, ledit support est revêtu sur au moins une de ses faces d'un film en un matériau comportant un gélifiant stable en milieu alcalin.

L'inhibiteur organique peut être constitué par 1 à 1000 ppm d'au moins un composé organique de stabilisation choisi parmi les composés polyfluorés du type fluoroalcool éthoxylé et les composés du type sulfure d'alcoyle et d'alcool polyéthoxylé. De tels inhibiteurs sont décrits dans les brevets FR-A-2 567 328 et FR-A-2 583 580. Le composé minéral est de préférence constitué par 0,005 % à 1 % en poids d'indium.

A titre d'exemples préférentiels, le générateur selon l'invention contient :
- 0,03 % d'indium et 50 ppm de composé organique

- 0,2 % d'indium et 100 ppm de composé organique
- 0,1 % d'indium et 10 ppm de composé organique
- 0,05 % d'indium et 10 ppm de composé organique.

Le séparateur selon l'invention permet, de manière inattendue, de diminuer les pertes énergétiques à l'intérieur du générateur "propre", ce générateur gardant une longue durée de vie et ses caractéristiques de décharge à fort courant.

Selon un premier mode de réalisation, ledit matériau est une pâte d'électrolyte gélifié avec un gélifiant choisi parmi la carboxyméthylcellulose, les amidons modifiés, l'alcool polyvinylique, l'hydroxypropylcellulose.

Selon un second mode de réalisation, ledit matériau est à base d'alcool polyvinylique.

Le séparateur ainsi constitué peut se travailler de la même manière que le support seul, par découpe et thermoscellage si besoin est. Les propriétés de résistance à la traction, d'ascension capillaire de l'électrolyte et de formage restent suffisantes pour une utilisation aisée en pile alcaline.

Lesdits films permettent d'utiliser des constituants chimiques de facture standard pour la réalisation des électrodes positives des piles alcalines sans mercure. Ces produits peuvent être utilisés tels quels, sans traitement supplémentaire, tel que par exemple purification ou lavage, ce qui permet d'éviter un surcoût des matières chimiques entrant dans leur constitution.

Le film est déposé sur l'une ou sur les deux faces dudit support tissé ou non tissé.

Le mécanisme par lequel l'utilisation d'un séparateur selon l'invention dans une pile propre sans mercure et sans cadmium permet d'augmenter la durée de vie de l'élément n'est pas actuellement explicité. On peut cependant faire certaines hypothèses.

Une première hypothèse est que le séparateur empêche les impuretés du compartiment cathodique, d'atteindre le compartiment anodique et d'accélérer la corrosion du zinc. Les très faibles teneurs en impuretés actuellement contenues dans les matériaux d'électrode ne permettent cependant pas de rendre compte de la totalité de l'effet positif du séparateur selon l'invention.

Une seconde hypothèse est que le séparateur modifie la répartition électrolytique entre l'électrode positive et l'électrode négative, et cela en faveur de l'électrode négative ; il en résulte par loi d'action de masse, ou autre mécanisme, une moindre corrosion du zinc.

Une troisième hypothèse est que cette modification dans la répartition électrolytique limite de façon indirecte les réactions de corrosion au niveau de l'électrode positive, c'est-à-dire sur les matériaux, tels que le bioxyde de manganèse, le graphite ou l'acier du container.

Des mesures de microcalorimétrie sur des piles propres avec séparateur selon l'invention ont montré que les pertes énergétiques étaient très nettement diminuées. Ceci a naturellement pour conséquence une meilleure conservation de l'énergie de la pile et donc une durée de vie accrue. Les mesures obtenues par microcalorimétrie seront rapportées ci-après.

Un autre avantage majeur de l'utilisation du séparateur selon l'invention en pile propre sans mercure et sans cadmium, et contenant un inhibiteur de corrosion organique et un composé minéral de conduction électrique, est la possibilité de jouer sur les trois composants (séparateur, inhibiteur et composé minéral conducteur) pour mieux optimiser les caractéristiques et atteindre des niveaux de pertes énergétiques faibles.

L'invention a également pour objet un procédé de fabrication d'un tel séparateur.

Dans une première variante, on prépare une solution diluée de carboxyméthylcellulose, d'amidons modifiés ou d'alcool polyvinylique. On confère ensuite une certaine viscosité au mélange, soit par échauffement, soit par ajout d'agents réticulants dans le cas de l'alcool polyvinylique, soit par stockage à température ambiante pendant un temps plus ou moins long.

La solution visqueuse ainsi obtenue est ensuite utilisée pour imprégner ou empâter le support tissé ou non tissé. Une technique habituelle est de distribuer la solution visqueuse à l'aide d'une raclette disposée au-dessus du support qui est en translation sur un rail de guidage. Le séparateur empâté est ensuite séché à température ambiante, ou entre 50 et 100°C pour accélérer le séchage.

Lorsque le séparateur est disposé dans la pile et que l'on introduit de la potasse à son contact, la carboxyméthylcellulose, les amidons modifiés ou l'alcool polyvinylique réagissent avec la potasse et l'on réalise in situ le film défini plus haut.

Selon les résultats désirés, le support peut être empâté sur une ou deux faces, avec éventuellement plusieurs couches successives. Il est du domaine de l'homme de l'art d'ajuster la composition et la viscosité de la solution d'empâtage en fonction des caractéristiques du support tissé ou non tissé. Ces caractéristiques sont principalement la porosité du support, la nature des fibres constitutives et la vitesse de défilement du support dans son rail de guidage.

Dans une deuxième variante de fabrication, on peut constituer un ensemble multicouche réalisé en alternant des couches de support tissé ou non tissé, avec des couches d'un film écran généralement à base d'alcool polyvinylique. Le film d'alcool polyvinylique devra être insoluble en milieu alcalin. Son épaisseur est comprise entre 25 et 60 micromètres et sa résistance électrolytique est comprise entre 0,5 milliohm/cm² et 3 milliohm/cm².

L'adhérence des deux couches du séparateur peut être réalisée par colaminage ou thermosoudage du film d'alcool polyvinylique sur le support tissé ou non tissé. Cette thermosoudure peut se faire en continu, par passage du support et du film d'alcool polyvinylique entre les deux rouleaux chauffants d'une machine à calandrer. La qualité de l'adhérence dépend de la pression excercée, du temps de contact et de la température des rouleaux. A titre d'exemple on pourra travailler avec des pressions de l'ordre de 1,5 à 5 kg/cm² et à des températures comprises entre 60 et 100°C, 80°C étant toutefois préférable.

D'autres caractéristiques et avantages de la présente invention apparaîtront au cours de la description suivante de modes de réalisation donnés à titre illustratif mais nullement limitatif.

Divers types de séparateurs ont été préparés.

EXEMPLE I :

On prépare une solution comportant en poids :
- 2,5 % d'hydroxypropylcellulose
- 10 % de carboxyméthylcellulose
- 87,5 % d'éthanol anhydre

Le support du séparateur est un papier non tissé présentant un grammage de 36 g/m², et une épaisseur de 130 micromètres. Avant toute mise en forme, on empâte l'une des faces de ce papier avec la solution préparée ci-dessus. On sèche pendant 12 heures dans une étuve à 70°C. Le papier empâté présente alors un grammage de 60,5 g/m² et une épaisseur de 250 micromètres.

On le met en forme pour l'introduire dans la pile. Lors du dépôt d'électrolyte alcalin dans la pile et sa mise en contact avec le papier empâté, la pâte va s'hydrater et créer in situ le film selon l'invention.

EXEMPLE II

On prépare une solution d'alcool polyvinylique comportant :
- 82 à 86 % de H2O
- 11 à 17 % d'alcool polyvinylique rhodoviol 30/5
- 0,5 à 3 % de Polyoxyméthylène

Cette solution présente une viscosité comprise entre 50 et 100 centipoises après un stockage de 24 heures à 25°C.

Le support utilisé est un feutre non tissé de 39g/m² de grammage et de 110 micromètres d'épaisseur. Après empâtage sur une face, le grammage final est de 70 g/m² et l'épaisseur finale du support muni de son film est de 150 micromètres.

EXEMPLE III

On thermosoude par colaminage un film d'alcool polyvinylique d'épaisseur 30 micromètres et un support non tissé constitué de fibres de vinyle et de rayonne mélangées.

La température des rouleaux de calandrage est de 80°C et la pression de thermosoudure est de 3 kg/cm² pendant 4 à 5 secondes. Le séparateur final a une épaisseur de 130 micromètres.

Des piles alcalines de module LR6 utilisant une électrode négative gélifiée de zinc exempte de mercure et de cadmium mais contenant un composé organique de stabilisation et un peu d'indium, une électrode positive constituée de composés chimiques de facture courante en pile alcaline et non dépollués préalablement, ont été testées dans un microcalorimètre fonctionnant à 60°C régulés, durant 36 heures.

Les piles se répartissent en deux catégories A et B.
- Les piles de la catégorie A comportent un séparateur selon l'invention réalisé par la méthode de l'exemple I.
- Les piles de la catégorie B comportent un séparateur de l'art antérieur.

Les valeurs des réactions chimiques correspondant à la corrosion du zinc de l'électrode négative non amalgamée, données par le microcalorimètre sont les suivantes :
- catégorie A : 800 microwatts
- catégorie B : 1500 microwatts

On constate la nette diminution de la réaction de corrosion du zinc dans les piles A et l'avantage certain que peuvent procurer lesdits films dans le cas particulier des piles alcalines à électrodes négatives ne contenant pas de mercure, ni de cadmium.

Bien entendu, l'invention n'est pas limitée aux exemples de réalisation décrits ; on pourra, sans sortir du cadre de l'invention, remplacer tout moyen par un moyen équivalent.

Revendications

1/ Générateur électrochimique primaire à électrolyte alcalin et à électrode négative de zinc, dont l'électrode positive est à base de bioxyde de manganèse, et dont le séparateur comprend au moins un support en fibres de polymère tissées ou non, caractérisé par le fait que, ladite électrode négative de zinc étant exempte de mercure, de cadmium et contenant un mélange comportant 0,005 % à 1% en poids d'indium et 1 à 1000 ppm d'au moins un composé organique de stabilisation choisi parmi les composés polyfluorés du type fluoroalcool éthoxylé et les composés du type sulfure d'alcoyle et d'alcool polyéthoxylé, ledit support est revêtu sur au moins une de ses faces d'un film en un matériau comportant un gélifiant stable en milieu alcalin, ledit séparateur permettant de diminuer les pertes énergétiques dudit générateur et d'accroître sa durée de conservation.

2/ Générateur électrochimique selon la revendication 1, caractérisé par le fait que ledit matériau est une pâte d'électrolyte gélifié avec un gélifiant choisi parmi la carboxyméthylcellulose, les amidons modifiés, l'alcool polyvinylique, l'hydroxypropylcellulose.

3/ Générateur électrochimique selon la revendication 1, caractérisé par le fait que ledit matériau est à base d'alcool polyvinylique.

4/ Générateur électrochimique selon l'une des revendications 1 à 3, caractérisé par le fait que les proportions relatives d'indium et de composé organique sont choisies parmi les proportions suivantes :

- 0,03 % d'indium et 50 ppm de composé organique
- 0,2 % d'indium et 100 ppm de composé organique
- 0,1 % d'indium et 10 ppm de composé organique
- 0,05 % d'indium et 10 ppm de composé organique.

5/ Procédé de fabrication d'un séparateur pour générateur selon la revendication 2, caractérisé par le fait que l'on prépare une solution de gélifiant exempte d'électrolyte, que l'on empâte ledit support, qu'on le sèche, qu'on l'introduit dans la pile, que l'on dépose de l'électrolyte sur la face empâtée et qu'il s'y forme ledit film in situ.

6/ Procédé de fabrication d'un séparateur pour un générateur selon la revendication 3, caractérisé par le fait que ledit support est revêtu par colaminage d'un film d'alcool polyvinylique sur au moins une de ses faces.

7/ Procédé de fabrication selon la revendication 6, caractérisé par le fait que l'on constitue un ensemble multicouche en alternant des supports et des films d'alcool polyvinylique, l'adhérence étant obtenue par colaminage ou thermosoudure.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 361 632 (WEBER et al.) * Colonne 1, lignes 36-47; colonne 2, lignes 29-35; colonne 3, lignes 7-47; colonne 9, lignes 53-55 * | 5,6 | H 01 M 2/16 H 01 M 2/14 H 01 M 6/04 H 01 M 4/62 |
| Y | | 1-4 | |
| Y | PATENT ABSTRACTS OF JAPAN, vol. 11, no. 36 (E-477)[2483], 3 février 1987; & JP-A-61 203 564 (TOSHIBA CORP.) 09-09-1986 * Résumé * | 1-4 | |
| A | PATENT ABSTRACTS OF JAPAN, vol. 10, no. 248 (E-431)[2304], 26 août 1986; & JP-A-61 78 051 (FUJI ELECTROCHEM. CO., LTD) 21-04-1986 | 1,4 | |
| A | EP-A-0 239 674 (VARTA BATTERIE AG) * Revendications * | 1,4 | |
| A | GB-A-2 170 946 (DURACELL INC.) * Page 3, lignes 3-7,37,45-50 * | 1,4 | DOMAINES TECHNIQUES RECHERCHES (Int. Cl.5) |
| A | EP-A-0 205 783 (UNION CARBIDE) * Revendications * | 1,4 | H 01 M |
| X | FR-A-2 222 763 (ESB INC.) * Page 1, lignes 17-19; page 2, lignes 29-31; page 5, ligne 37 - page 6, ligne 3; page 9, ligne 16; page 10, ligne 35 - page 11, ligne 9; revendications 3,4; figure 5 * | 5 | |
| A | --- -/- | 1,2,7 | |

Le présent rapport a été établi pour toutes les revendications

| Lieu de la recherche | Date d'achèvement de la recherche | Examinateur |
|---|---|---|
| LA HAYE | 05-10-1989 | CZECH B.P. |

Office européen
des brevets

RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 251 922 (TOKYO SHIBAURA)<br>* Revendication 1; page 7, ligne 25 - page 8, ligne 24 *<br>--- | 1-5 | |
| A | FR-A-2 148 740 (THE GATES RUBBER CO.)<br>* Page 1, ligne 3; pages 4,6 *<br>--- | 1-3,5-7 | |
| A | FR-A-2 283 554 (S.A.F.T.)<br>* Page 2, lignes 26-32; page 4, lignes 36-39 *<br>--- | 1-3,5-7 | |
| A | FR-A-2 283 555 (S.A.F.T.)<br>* Revendications; page 6, ligne 33 *<br>--- | 1,5 | |
| A | CHEMICAL ABSTRACTS, vol. 85, 1976, page 154, résumé no. 49192h, Columbus, Ohio, US; & JP-A-75 134 142 (MATSUSHITA ELECTRIC INDUSTRIAL CO., LTD) 24-10-1975<br>--- | 1,6 | |
| A | PATENT ABSTRACTS OF JAPAN, vol. 4, no. 141 (E-28)[623], 4 octobre 1980, page 150 E 28; & JP-A-55 93 670 (MATSUSHITA DENKI SANGYO) 16-07-1980<br>--- | 1,5 | |
| A | PATENT ABSTRACTS OF JAPAN, vol. 7, no. 200 (E-196)[1345], 3 septembre 1983; & JP-A-58 100 358 (MATSUSHITA DENKI SANGYO K.K.) 15-06-1983<br>--- | 1,5,7 | |
| A | US-A-4 378 414 (FURAKAWA)<br>* Revendication 5; colonne 3, ligne 11 *<br>----- | 7 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 05-10-1989 | CZECH B.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EP.) FORM 1503 03.82 (P0402)